# EUROPEAN PATENT APPLICATION

(11) **EP 4 775 013 A1**
(43) Date of publication of application: **15.07.2026**
(21) Application number: 25221061.2
(22) Date of filing: 05.12.2025
(51) Int. Cl.: A01D 34/00, A01G 20/35

(54) **A ROBOTIC LAWN MOWER**

(30) Priority: 10.01.2025 SE 2550016
(71) Applicant: Husqvarna AB, 561 82 Huskvarna (SE)
(72) Inventor: Emme, Linus, 561 82 Huskvarna (SE)

(57) **Abstract**

The present disclosure relates to a robotic lawn mower (100) adapted for a forward travelling direction (D) and a reverse travelling direction (R) and comprising a body (140) that has a frontmost end (101) that is adapted to face the forward travelling direction (D) and ground (G) during normal operation, and a rearmost end (102) that is adapted to face the reverse travelling direction (R) and ground (G) during normal operation, the robotic lawn mower (100) further comprising at least one pair of drive wheels (131A), at least one further wheel (130B), and at least one rotatable grass cutting disc (160) having a disc rotation axle (165), wherein the robotic lawn mower (100) further comprises a mat arrangement (150) that in turn comprises a mat (151) that is positioned between the frontmost end (101) and the rearmost end (102), having a mainly longitudinally running first edge (157) that runs mainly across the forward running direction (D) and is adapted to be the part of the mat (151) that is closest to ground (G) during normal operation, where the mat arrangement (150) comprises a mat attachment arrangement (152A, 152B, 153A, 154B, 156) that connects the mat (151) to the body (140) in a movable manner.

## Description

### TECHNICAL FIELD

The present disclosure relates to a robotic lawn mower adapted for a forward travelling direction and a reverse travelling direction and comprising a body that has a frontmost end that is adapted to face the forward travelling direction and ground during normal operation, and a rearmost end that is adapted to face the reverse travelling direction and ground during normal operation. The robotic lawn mower further comprises at least one pair of drive wheels, at least one further wheel, and at least one rotatable grass cutting disc having a disc rotation axle.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

There is a problem with piles of cut grass residue on the lawn, both aesthetically and in for form of obstacles on a golf course. There is also a problem with grass dew/moisture which affects cutting efficiency.

It is therefore desired to provide a robotic lawn mower that comprises means for avoiding piles of cut grass residue and to enable cutting of grass with less dew/moisture.

### SUMMARY

The object of the present disclosure is to provide means for efficient removal of cut grass and other debris from the drive wheels of a robotic lawnmower, and to enable cutting of grass with less dew/moisture.

This object is achieved by means of a robotic lawn mower adapted for a forward travelling direction and a reverse travelling direction and comprising a body that has a frontmost end that is adapted to face the forward travelling direction and ground during normal operation, and a rearmost end that is adapted to face the reverse travelling direction and ground during normal operation. The robotic lawn mower further comprises at least one pair of drive wheels, at least one further wheel, and at least one rotatable grass cutting disc having a disc rotation axle. The robotic lawn mower further comprises a mat arrangement that in turn comprises a mat that is positioned between the frontmost end and the rearmost end, having a mainly longitudinally running first edge that runs mainly across the forward running direction and is adapted to be the part of the mat that is closest to ground during normal operation. The mat arrangement comprises a mat attachment arrangement that connects the mat to the body in a movable manner.

When the robotic lawn mower is moving, the mat will distribute cut grass and other types of debris that may have collected in piles, which otherwise will be aesthetically disturbing and constitutes obstacles on, for example, a golf course. Furthermore, when the robotic lawn mower is moving, the mat will remove dew and moisture from the lawn.

According to some aspects, the mat attachment arrangement comprises a spring-biased holder that is adapted to press the first edge towards ground during normal operation.

According to some aspects, alternatively, the mat attachment arrangement comprises a pivotable mat holder that is pivotable along a longitudinally running pivot axis that runs mainly parallel to the first edge, where the pivotable mat holder is spring-biased to retain the first edge biased towards ground during normal operation.

This means that when the grass becomes sufficiently high or stiff, or if there is an obstacle, the mat automatically will yield and move away from the ground against the force of the springs, such that the motion of the lawn mower is not impaired, and such that a collision protection is not triggered.

According to some aspects, the mat attachment arrangement comprises a mat holder that is rotably connected to the disc rotation axle such that the mat holder has a vertical position that follows a vertical position of the cutting disc while the first edge is maintained running mainly across the forward running direction.

According to some aspects, the mat is a resilient mat that comprises a plurality of brush bristles that run between the first edge and a second edge that runs mainly parallel to the first edge.

According to some aspects, the mat is a resilient mat that comprises a rubber sheet that runs between the first edge and a second edge that runs mainly parallel to the first edge.

According to some aspects, the mat comprises a plurality of pins that run between the first edge and a second edge that runs mainly parallel to the first edge, where the pins are connected to a pin holding rod.

This means that the mat can be composed in different ways that meet different needs to different degrees.

According to some aspects, the mat is positioned between a drive wheel axis and the rearmost end of the robotic lawn mower. In this manner, cut grass can immediately be spread by the mat, preventing cut grass and other types of debris to form piles.

According to some aspects, the mat is positioned between a drive wheel axis and the frontmost end of the robotic lawn mower. In this manner, dew and moisture can be removed before cutting.

According to some aspects, the robotic lawn mower comprises at least one further mat arrangement. This means that different mats can have different functions, for example one mat can be used for removing due and moisture before cutting, and one mat can be used for spreading cut grass, preventing cut grass and other types of debris to form piles.

According to some aspects, the robotic lawn mower comprises a first mat arrangement and a second mat arrangement, where the mat arrangements are positioned between the cutting disc and the rearmost end of the robotic lawn mower. This means that both mat arrangements 150, 250; 450 can be used for spreading cut grass, preventing cut grass and other types of debris or objects.

According to some aspects, the mat arrangements comprise mutually different types of mats. This means that the mats can be tailored for their respective task and position.

According to some aspects, the first mat arrangement is positioned closer to the rearmost end of the robotic lawn mower than the second mat arrangement. The first mat arrangement comprises a first mat that in turn comprises a plurality of brush bristles that run between the first edge and a second edge that runs mainly parallel to the first edge. The second mat arrangement comprises a second mat that in turn comprises a plurality of pins that run between the first edge and a second edge that runs mainly parallel to the first edge.

According to some aspects, the first edge is adapted to reach a maximum distance into the grass that is to be cut, where the maximum distance lies between 40% and 60% of the average grass height. In this manner, a desired effect is achieved with a minimum of decreased grass cutting efficiency.

According to some aspects, the first edge is adapted to be biased towards a grass surface with a force that lies between 5N and 40N, and preferably between 10N and 30N. In this manner, the mat with yield and deflect when reaching a certain resistance, such that the motion of the lawn mower is not impaired, and such that a collision protection is not triggered.

According to some aspects, the body has a circumferentially running perimeter that faces ground during normal operation, where the mat extends within the perimeter. This means that the mat does not extend outside the body, which results in that the mat will not touch or get stuck at objects outside the body.

### BRIEF DESCRIPTION OF THE DRAWINGS

The present disclosure will now be described more in detail with reference to the appended drawings, where:
- Figure 1: shows a perspective front view of a robotic lawn mower;
- Figure 2: shows a perspective bottom view of the robotic lawn mower according to a first example;
- Figure 3: shows a first side view of the robotic lawn mower without a body part and drive wheel according to the first example;
- Figure 4: shows a second side view of the robotic lawn mower without a body part and drive wheel according to the first example;
- Figure 5: shows an enlarged part of Figure 4;
- Figure 6: shows a perspective bottom view of the robotic lawn mower according to a second example;
- Figure 7: shows a first side view of the robotic lawn mower without a body part and drive wheel according to the second example;
- Figure 8: shows a second side view of the robotic lawn mower without a body part and drive wheel according to the second example;
- Figure 9: shows an enlarged part of Figure 8;
- Figure 10: shows a third side view of the robotic lawn mower without a body part and drive wheel according to the second example;
- Figure 11A: shows a schematic front view of a generic mat;
- Figure 11B: shows a schematic top view of an arcuate mat;
- Figure 11C: shows a schematic top view of a V-shaped mat;
- Figure 12: shows a first side view of the robotic lawn mower according to a third example;
- Figure 13: shows a second side view of the robotic lawn mower according to the third example;
- Figure 14: shows a detailed side view of a mat arrangement;
- Figure 15: shows a schematic overview of the robotic lawn mower;
- Figure 16: shows a perspective bottom view of the robotic lawn mower according to a fourth example;
- Figure 17: shows a side view of the robotic lawn mower without a body part and drive wheel according to the fourth example;
- Figure 18: shows an enlarged part of Figure 17; and
- Figure 19: shows a perspective bottom view of the robotic lawn mower according to a fifth example;

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

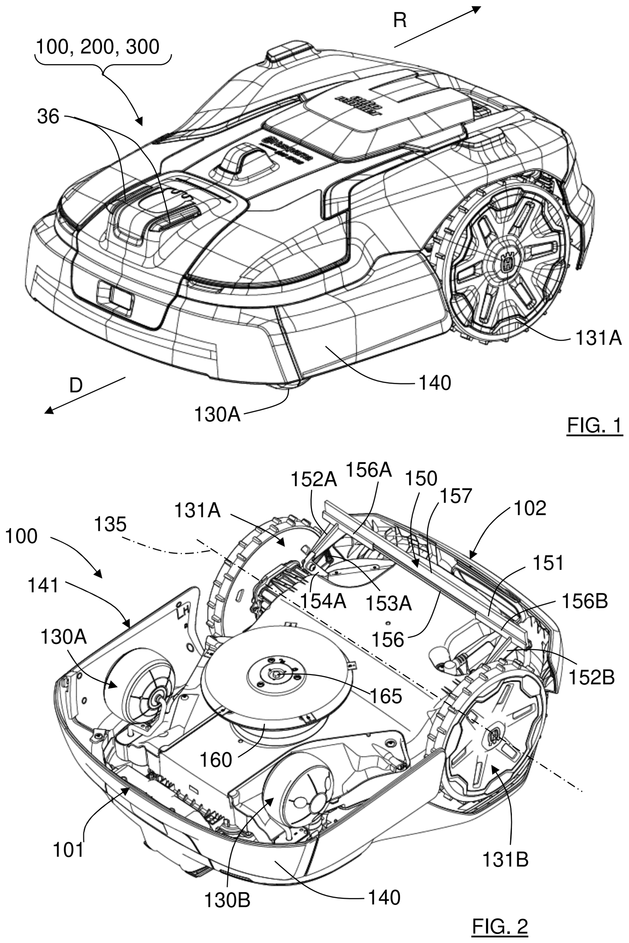

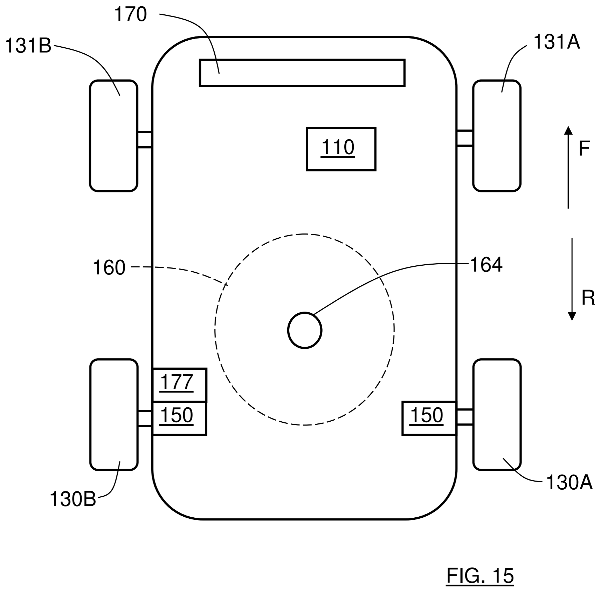

In the following, it is referred to Figure 1, Figure 2 and Figure 15. Figure 1 shows a perspective side view of a robotic lawn mower 100, Figure 2 shows a perspective bottom view of the robotic lawn mower 100 and Figure 15 shows a schematic overview of the robotic lawn mower 100.

The robotic lawnmower 100 is adapted for a forward travelling direction D and a reverse travelling direction R. The robotic lawnmower 100 comprises a main body part 140 comprising a body 140 that has frontmost end 101 that is adapted to face the forward running direction F and ground D during normal operation, and a rearmost end 102 that is adapted to face the reverse running direction R and ground G during normal operation. The term normal operation relates to normal operation of the robotic lawnmower 100.

According to some aspects, the body 140 has a circumferentially running perimeter 141 that faces ground G during normal operation. According to some aspects, the body 140 may comprise two or more sub-parts.

The robotic lawnmower 100 further comprises at least one pair of drive wheels 131A, 131B, at least one further wheel 130A, 130B, and at least one rotatable grass cutting disc 160, having a disc rotation axle 165. In this example, the at least one further wheel is constituted by two swivelable wheels 130A, 130B, but could be constituted by one or more other types of wheel, and even one or more further drive wheels.

According to some aspects, the rotatable cutting disc 160 is driven by a cutter motor 164, and the drive wheels 131A, 131B are drivably connected to an electric drive wheel motor 150.

According to some further aspects, the robotic lawnmower 100 further comprises a rechargeable electric power source 177, such as a battery 177, adapted to provide power to the electric motors 150, 164 and a charging reception arrangement 156, for example in the form of charging skids. The charging reception arrangement 156 is adapted to be electrically connected to a charging transmission arrangement at a charging station (not shown).

According to some aspects, the robotic lawnmower 100 further comprises a control unit 110 and an environmental detection system 170 that for example comprises at least one of a radar transceiver, an ultrasonic device, a Lidar device, a navigation sensor arrangement and/or a boundary wire sensor. According to some further aspects, the control unit 110 is adapted to control and position the robotic lawn mower 100 by means of input derived from the environmental detection system 170.

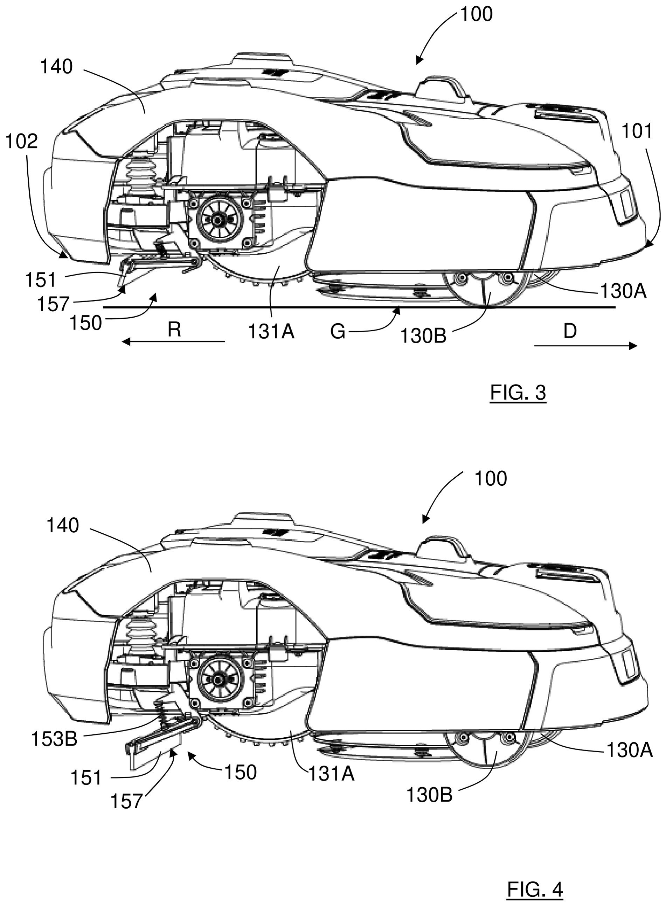

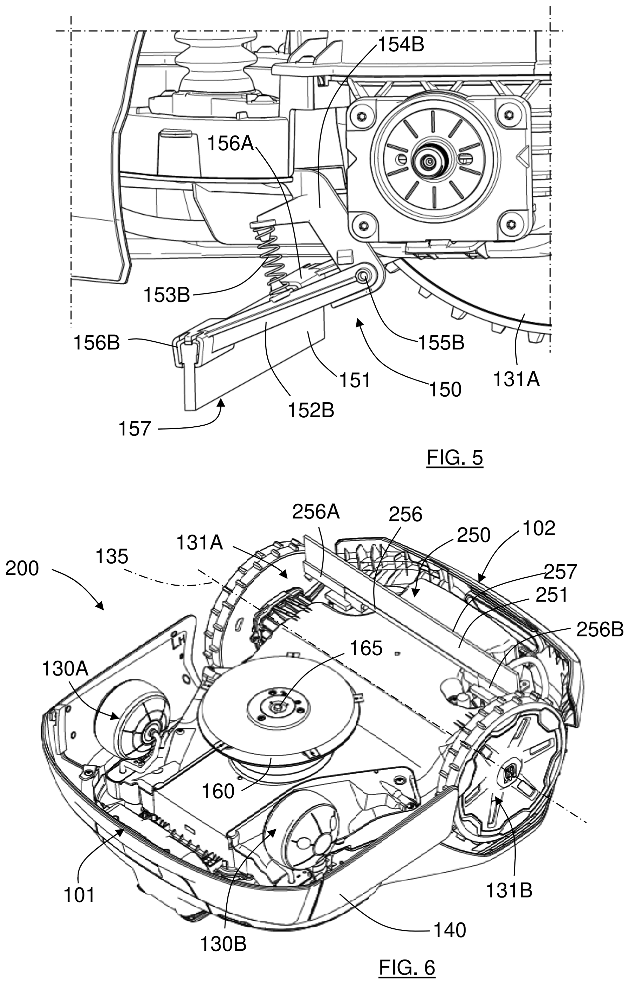

In the following, it is also referred to Figure 3-14. Figure 3 shows a first side view of the robotic lawn mower 100 without a body part and drive wheel according to the first example, Figure 4 shows a second side view of the robotic lawn mower100 without a body part and drive wheel according to the first example, and Figure 5 shows an enlarged part of Figure 4.

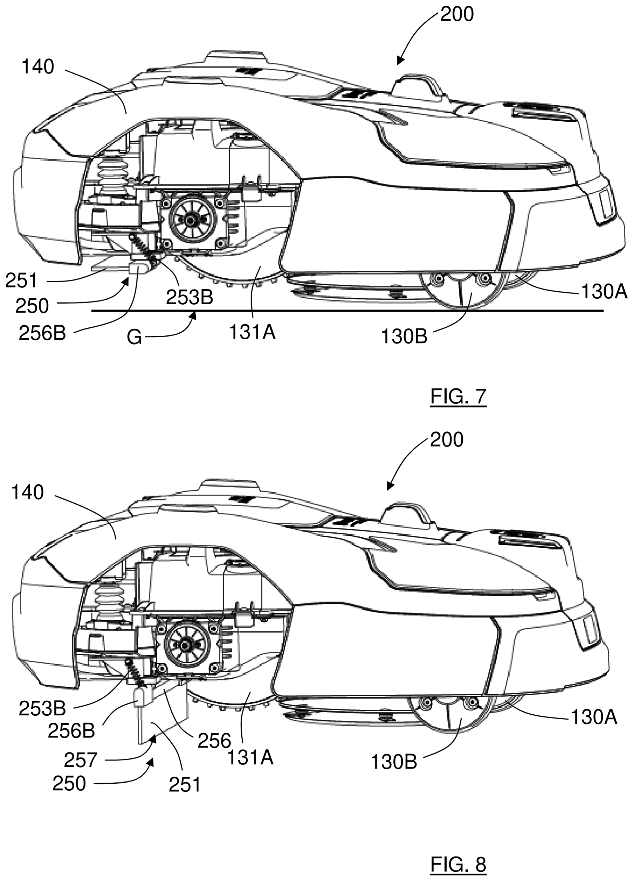

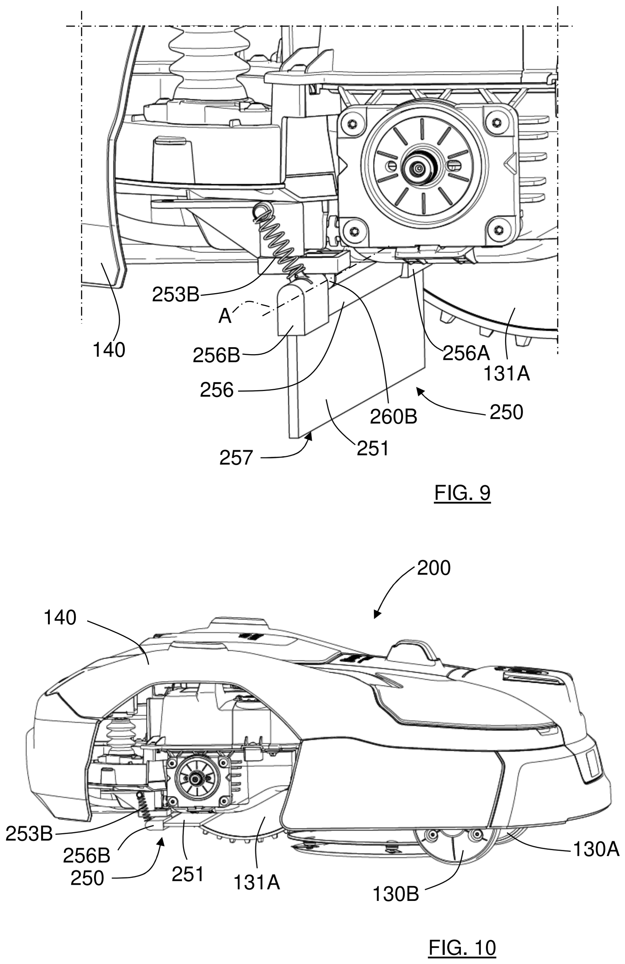

Figure 6 shows a perspective bottom view of the robotic lawn mower 200 according to a second example, Figure 7 shows a first side view of the robotic lawn mower 200 without a body part and drive wheel according to the second example, Figure 8 shows a second side view of the robotic lawn mower 200 without a body part and drive wheel according to the second example, Figure 9 shows an enlarged part of Figure 8, and Figure 10 shows a third side view of the robotic lawn mower 200 without a body part and drive wheel according to the second example.

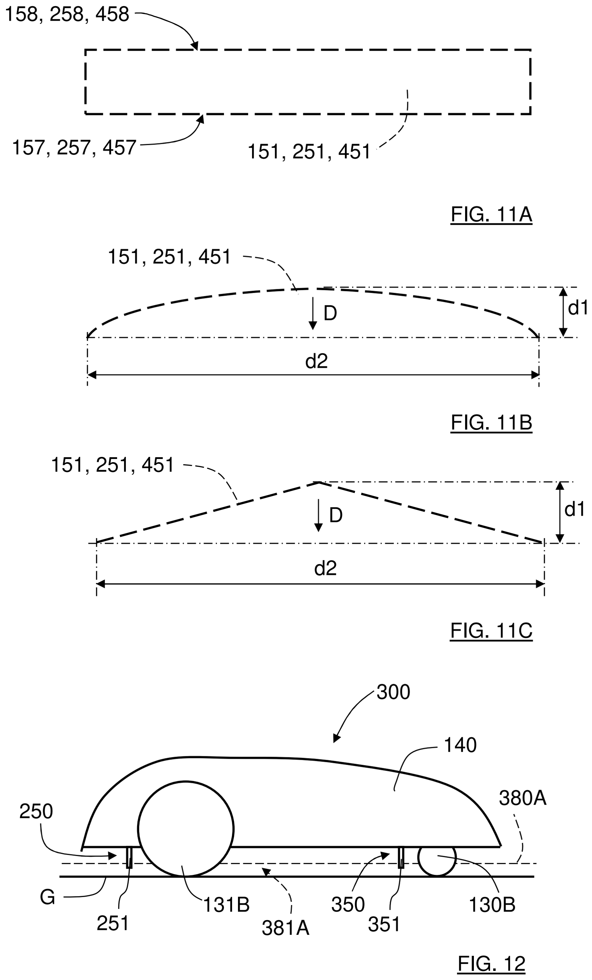

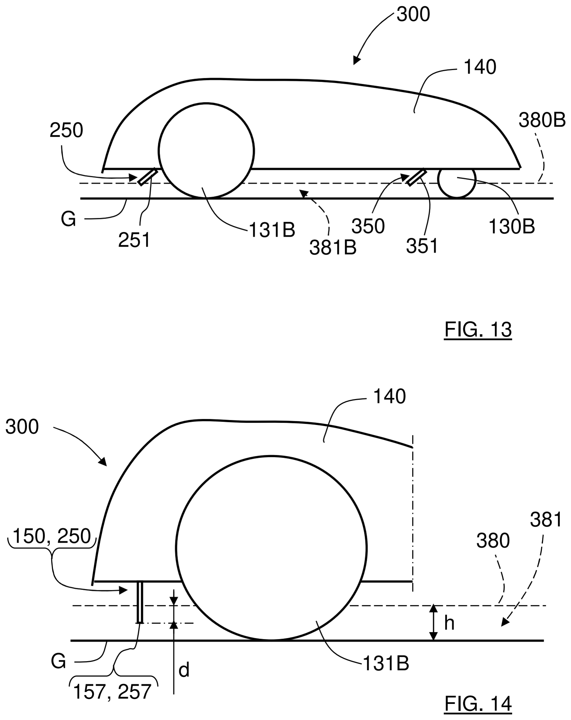

Figure 11A shows a schematic view of a mat, Figure 12 shows a first side view of the robotic lawn mower 300 according to a third example, Figure 13 shows a second side view of the robotic lawn mower 300 according to the third example and Figure 14 shows a detailed side view of a mat arrangement.

According to the present disclosure, the robotic lawn mower 100 comprises a mat arrangement 150, 250 that in turn comprises a mat 151, 251 that is positioned between the frontmost end 101 and the rearmost end 102, having a mainly longitudinally running first edge 157, 257 that runs mainly across a forward running direction D of the robotic lawn mower 100 and is adapted to be the part of the mat 151, 251 that is closest to ground G during normal operation. The mat arrangement 150, 250 comprises a mat attachment arrangement 152A, 152B, 153A, 154B, 156; 253B, 256 that connects the mat 151, 251 to the body 140 in a movable manner.

This means that the mat 151, 251 does not extend past the frontmost end 101 and the rearmost end 102 along the forward running direction D, but may extend outside the perimeter 141 of the body 140 across the forward running direction D.

When the robotic lawn mower is moving, the mat 151, 251 will distribute cut grass and other types of debris that may have collected in piles, which otherwise will be aesthetically disturbing and constitutes obstacles on, for example, a golf course.

Furthermore, when the robotic lawn mower 100 is moving, the mat 151, 251 will remove dew and moisture from the lawn, and if the mat 151, 251 is sufficiently wide, the robotic lawn mower 100 will cut grass on a cutting lane where dew and moisture have been removed when cutting an adjacent cutting lane.

The efficiency for the different tasks will depend on the type of mat, different mat types will be described later.

The first edge 157, 257 running mainly longitudinal across the forward running direction D means that the first edge 157, 257, and also the mat 151, 251, mainly has a longitudinal extension across the forward running direction D that for example may be arcuate, as illustrated in Figure 11B, or V-shaped, as illustrated in Figure 11C, within certain limitations such that the extension still is mainly longitudinal. According to some aspects, a largest extension d1 along the forward running direction D should according to some aspects fall below a largest extension d2 across the forward running direction D.

According to some aspects, as shown in Figure 2 - Figure 5 and Figure 11A that illustrate a first example, the mat attachment arrangement comprises a spring-biased holder 156A, 156B, 156 that is adapted to press the first edge 157 towards ground G, during normal operation.

As illustrated, the spring-biased holder comprises holding end parts 156A, 156B that are connected by a holding part 156, which parts 156, 156A, 156B together run along and holds a second edge 158 that runs mainly parallel to the first edge 157. The holding end parts 156A, 156B are fixedly connected to corresponding holding arms 152A, 152B that also are comprised in the mat attachment arrangement, and which are pivotingly connected to corresponding spring holders 154A, 154B such that they pivot around a corresponding pivot point 155B (only one shown in Figure 5). The spring holders 154A, 154B are fixed relative the body 140 or a lawn mower chassis and hold corresponding springs 153A, 153B that are connected to a corresponding holding arm 152A, 152B. The springs 153A, 153B thus press the holding arms 152A, 152B towards ground G as they pivot around the corresponding pivot point 155B, and thus press the holding part 156 and the holding end parts 156A, 156B towards ground G such that the first edge 157 is pressed towards ground G.

This means that when the grass becomes sufficiently high or stiff, or if there is an obstacle, the mat 151 automatically will yield and move away from the ground against the force of the springs 153A, 153B, such that the motion of the lawn mower 100 is not impaired, and such that a collision protection is not triggered. For example, it can be seen in Figure 3 that the mat 151 is at a higher position, away from the ground G, than as illustrated in Figure 4.

According to some aspects, as shown in Figure 6 - Figure 10 and Figure 11A that illustrate a second example, the mat attachment arrangement comprises a pivotable mat holder 256 that is pivotable along a longitudinally running pivot axis A that runs mainly parallel to the first edge 257, where the pivotable mat holder 256 is spring-biased to retain the first edge 257 biased towards ground G during normal operation.

As illustrated, the pivotable mat holder comprises holding end parts 256A, 256B that are connected by a holding part 256, which parts 256, 256A, 256B together run along and holds a second edge 258 that runs mainly parallel to the first edge 257. Each holding end part 256A, 256B comprises an aperture that engages a pin 260B (only one shown in Figure 9) that is attached to the housing 140 or a lawn mower chassis such that each holding end part 256A, 256B can pivot around the corresponding pin 260B. A corresponding spring 253B (only one shown) is connected between the holding end parts 256A, 256B and the housing 140 or the lawn mower chassis. The springs 253B strive to pull the holding end parts 256A, 256B away from ground G, and thus bias the first edge 257 biased towards ground G during normal operation.

This means that when the grass becomes sufficiently high or stiff, or if there is an obstacle, the mat 251 automatically will yield and pivot away from the ground G against the force of the springs 253B, such that the motion of the lawn mower 100 is not impaired, and such that a collision protection is not triggered. For example, it can be seen in Figure 8 that the mat 251 is at a position where the first edge 257 is closest to ground G, while in Figure 7 and Figure 10 the mat 251 has pivoted away from the ground G in different directions. Which way the mat 251 will pivot away from the ground G depends on the robotic lawn mower's present travelling direction.

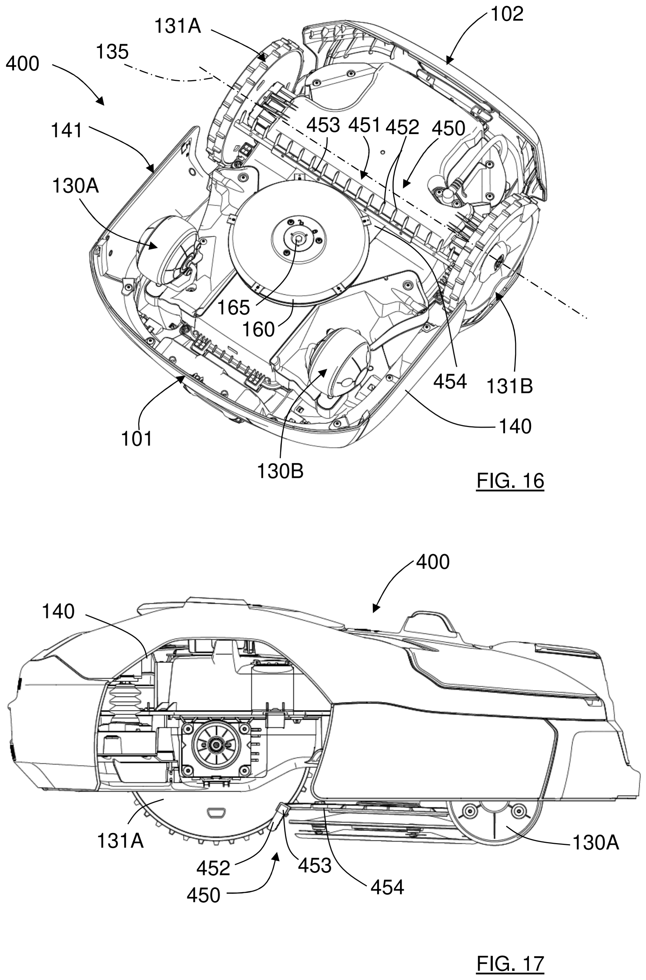

According to some aspects, as shown in Figure 16 - Figure 18 and Figure 11A that illustrate a fourth example, the mat attachment arrangement comprises a mat holder 454 that is rotably connected to the disc rotation axle 165 such that the mat holder 454 has a vertical position that follows a vertical position of the cutting disc 160 while the first edge 457 is maintained running mainly across the forward running direction D. In this context, the mat holder 454 being rotably connected to the disc rotation axle 165 does not mean that the mat holder 454 is adapted to rotate, but that the mat holder 454 is connected to the disc rotation axle 165 that can rotate without bringing the mat holder 454 into rotation. There is thus a connection between the mat holder 454 and the disc rotation axle 165 that admits rotation between these items.

As illustrated, the mat 451 is here the form of a rake with pins 452 that protrude from a holding rod 453, where the holding rod 453 is attached to the mat holder 454 that more or less embraces the disc rotation axle 165. While the disc rotation axle 165, the mat holder 454 does not rotate, while it follows vertical movements of the disc rotation axle 165 and the cutting disc 160, i.e., towards and away from the ground G. The disc rotation axle 165 and the cutting disc 160 can for example be vertically displaced when the grass cutting height is to be changed manually or changed via a motorized height adjustment arrangement.

In the following, some general examples will follow that are not dependent on the type of mat arrangement used.

According to some aspects, the mat is a resilient mat 151, 251 that comprises a plurality of brush bristles that run between the first edge 157, 257 and a second edge 158, 258 that runs mainly parallel to the first edge 157, 257.

According to some aspects, the mat is a resilient mat 151, 251 that comprises a rubber sheet that runs between the first edge 157, 257 and a second edge 158, 258 that runs mainly parallel to the first edge 157, 257.

According to some aspects, the mat 451 comprises a plurality of pins 452 that run between the first edge 457 and a second edge 458 that runs mainly parallel to the first edge 457, where the pins 452 are connected to a pin holding rod 453.

This means that the mat 451 is in the form of a rake with pins 452 that protrude from a holding rod 453, that is attached to the mat holder 454 as described above. The term mat is here to be interpreted broadly and embrace the plurality of pins that form a mat of pins.

This means that the mat 151, 251, 451 can be composed in different ways that meet different needs to different degrees.

According to some aspects, the mat 151, 251 is positioned between a drive wheel axis 135 and the rearmost end 102 of the robotic lawn mower 100, 200. This is illustrated with reference to Figure 2- Figure 10. In this manner, cut grass can immediately be spread by the mat 151, 251, preventing cut grass and other types of debris to form piles.

According to some aspects, as illustrated in Figure 12 and Figure 13, the mat 351 is positioned between a drive wheel axis 135 and the frontmost end 101 of the robotic lawn mower 100, 200. In this manner, dew and moisture can be removed before cutting.

According to some aspects, as illustrated in Figure 12 and Figure 13, the robotic lawn mower 300 comprises at least one further mat arrangement 150, 250; 350. Figure 12 and 13 illustrate mats 251, 351 that are pivotable as in the second example above, but it shall be noted that for all examples, every mat arrangement may be of any suitable kind. In Figure 12 the mats 251, 351 are at a position where the first edges are closest to ground G and protrude downwards into the grass 381A via a grass surface 380A, while in Figure 13 the mats 251, 351 have pivoted away from the ground G, the grass 381B and the grass surface 380B. This may for example be due to higher and/or stiffer grass. When reaching softer and/or lower grass, the mats 251, 351 will pivot back.

Having two mat arrangements 250, 350 as illustrated in Figure 12 and Figure 13 means that different mats can have different functions, for example one mat 351 can be used for removing due and moisture before cutting, and one mat 251 can be used for spreading cut grass, preventing cut grass and other types of debris to form piles. Here, different mats can have different compositions; for example the mat 351 that is used for removing due and moisture before cutting can comprise a rubber sheet, and the mat 251 that is used for spreading cut grass can comprise a plurality of brush bristles.

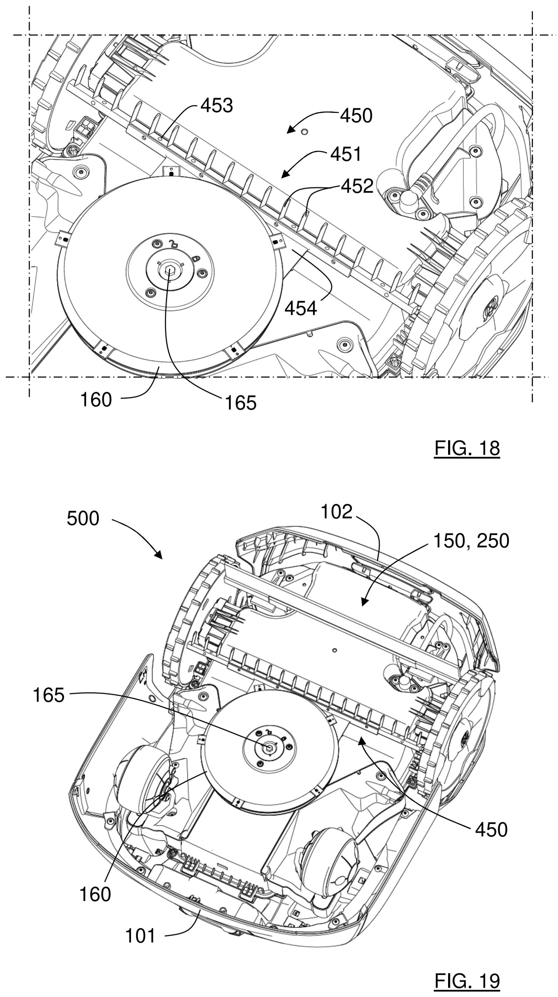

According to some aspects, as shown in Figure 19 that illustrates a fifth example, the robotic lawn mower 500 comprises a first mat arrangement 150, 250 and a second mat arrangement 450, where the mat arrangements 150, 250; 450 are positioned between the cutting disc 160 and the rearmost end 102 of the robotic lawn mower 500. This means that both mat arrangements 150, 250; 450 can be used for spreading cut grass, preventing cut grass and other types of debris or objects.

According to some aspects, the mat arrangements 150, 250; 350; 450 comprise mutually different types of mats. According to some aspects, the first mat arrangement 150, 250 comprises a first mat 151, 151 that in turn comprises a plurality of brush bristles that run between the first edge 157, 257 and a second edge 158, 258 that runs mainly parallel to the first edge 157, 257, and the second mat arrangement 450 comprises a second mat 451 that in turn comprises a plurality of pins 452 that run between the first edge 457 and a second edge 458 that runs mainly parallel to the first edge 457 .

This means that the mats can be tailored for their respective task and position.

According to some aspects, as shown in Figure 14, the first edge 157, 257 is adapted to reach a maximum distance d into the grass 381 that is to be cut, where the maximum distance d lies between 40% and 60% of the average grass height h. The maximum distance d is measured from a grass surface 380. All grass surfaces may for example be regarded as means surfaces since individual grass straws may be of different lengths. In this manner, a desired effect is achieved with a minimum of decreased grass cutting efficiency.

According to some aspects, the first edge 157, 257 is adapted to be biased towards a grass surface 380A, 380B with a force that lies between 5N and 40N, and preferably between 10N and 30N. In this manner, the mat with yield and deflect when reaching a certain resistance, such that the motion of the lawn mower is not impaired, and such that a collision protection is not triggered.

According to some aspects, the body 140 has a circumferentially running perimeter 141 that faces ground G during normal operation, where the mat 151, 251 extends within the perimeter 141. This means that the mat 151, 251 does not extend outside the body, which results in that the mat 151, 251 will not touch or get stuck at objects outside the body 140.

The present disclosure is not limited to the examples above, but may vary freely within the scope of the appended claims. For example, one mat may comprise different mat types along its extension, such as for example both a rake with pins and a rubber sheet.

## Claims

1. A robotic lawn mower (100, 200, 300, 400) adapted for a forward travelling direction (D) and a reverse travelling direction (R) and comprising a body (140) that has a frontmost end (101) that is adapted to face the forward travelling direction (F) and ground (D) during normal operation, and a rearmost end (102) that is adapted to face the reverse travelling direction (R) and ground (G) during normal operation, the robotic lawn mower (100, 200) further comprising at least one pair of drive wheels (131A, 131B), at least one further wheel (130A, 130B), and at least one rotatable grass cutting disc (160) having a disc rotation axle (165), wherein the robotic lawn mower (100) further comprises a mat arrangement (150, 250, 350, 450) that in turn comprises a mat (151, 251, 351, 451) that is positioned between the frontmost end (101) and the rearmost end (102), having a mainly longitudinally running first edge (157, 257, 457) that runs mainly across the forward running direction (D) and is adapted to be the part of the mat (151, 251, 351, 451) that is closest to ground (G) during normal operation, where the mat arrangement (150, 250, 350, 450) comprises a mat attachment arrangement (152A, 152B, 153A, 154B, 156; 253B, 256, 453) that connects the mat (151, 251, 351, 451) to the body (140) in a movable manner.

2. The robotic lawn mower (100) according to claim 1, wherein the mat attachment arrangement comprises a spring-biased holder (152A, 152B, 156) that is adapted to press the first edge (157) towards ground (G) during normal operation.

3. The robotic lawn mower (200) according to claim 1, wherein the mat attachment arrangement comprises a pivotable mat holder (256) that is pivotable along a longitudinally running pivot axis (A) that runs mainly parallel to the first edge (257), where the pivotable mat holder (256) is spring-biased to retain the first edge (257) biased towards ground (G) during normal operation.

4. The robotic lawn mower (400) according to claim 1, wherein the mat attachment arrangement comprises a mat holder (454) that is rotably connected to the disc rotation axle (165) such that the mat holder (454) has a vertical position that follows a vertical position of the cutting disc (160) while the first edge (457) is maintained running mainly across the forward running direction (D).

5. The robotic lawn mower (100, 200) according to any one of the previous claims, wherein the mat is a resilient mat (151, 251) that comprises a plurality of brush bristles that run between the first edge (157, 257) and a second edge (158, 258) that runs mainly parallel to the first edge (157, 257).

6. The robotic lawn mower (100, 200) according to any one of the claims 1-**4,** wherein the mat is a resilient mat (151, 251) that comprises a rubber sheet that runs between the first edge (157, 257) and a second edge (158, 258) that runs mainly parallel to the first edge (157, 257).

7. The robotic lawn mower (400) according to any one of the claims 1-4, wherein the mat (451) comprises a plurality of pins (452) that run between the first edge (457) and a second edge (458) that runs mainly parallel to the first edge (457), where the pins (452) are connected to a pin holding rod (453).

8. The robotic lawn mower (100, 200) according to any one of the previous claims, wherein the mat (151, 251) is positioned between a drive wheel axis (135) and the rearmost end (102) of the robotic lawn mower (100, 200).

9. The robotic lawn mower (100, 200) according to any one of the claims 1-7, wherein the mat (351) is positioned between a drive wheel axis (135) and the frontmost end (101) of the robotic lawn mower (100, 200).

10. The robotic lawn mower (300, 500) according to any one of the previous claims, comprising at least one further mat arrangement (150, 250; 350; 450).

11. The robotic lawn mower (500) according to claim 10, comprising a first mat arrangement (150, 250) and a second mat arrangement (450), where the mat arrangements (150, 250; 450) are positioned between the cutting disc (160) and the rearmost end (102) of the robotic lawn mower (500).

12. The robotic lawn mower (300, 400) according to any one of the claims 10 and 11, wherein the mat arrangements (150, 250; 350; 450) comprise mutually different types of mats.

13. The robotic lawn mower (500) according to claim 12 when dependent on claim 11, wherein the first mat arrangement (150, 250) is positioned closer to the rearmost end (102) of the robotic lawn mower (500) than the second mat arrangement (450), where the first mat arrangement (150, 250) comprises a first mat (151, 151) that in turn comprises a plurality of brush bristles that run between the first edge (157, 257) and a second edge (158, 258) that runs mainly parallel to the first edge (157, 257), and where the second mat arrangement (450) comprises a second mat (451) that in turn comprises a plurality of pins (452) that run between the first edge (457) and a second edge (458) that runs mainly parallel to the first edge (457).

14. The robotic lawn mower (100, 200) according to any one of the previous claims, wherein the first edge (157, 257) is adapted to reach a maximum distance (d) into the grass (381) that is to be cut, where the maximum distance (d) lies between 40% and 60% of the average grass height (h).

15. The robotic lawn mower (100, 200) according to any one of the claims 1-3, wherein the first edge (157, 257) is adapted to be biased towards a grass surface (380A, 380B) with a force that lies between 5N and 40N, and preferably between 10N and 30N.

16. The robotic lawn mower (100, 200) according to any one of the previous claims, wherein the body (140) has a circumferentially running perimeter (141) that faces ground (G) during normal operation, where the mat (151, 251) extends within the perimeter (141).
